# EUROPÄISCHE PATENTSCHRIFT

(11) **EP 0 537 521 B1**
(45) Veröffentlichungstag und Bekanntmachung des Hinweises auf die Patenterteilung: **14.02.1996**
(21) Anmeldenummer: 92116321.8
(22) Anmeldetag: 24.09.1992
(51) Int. Cl.: B01D 35/02, F02M 37/22

(54) **Flüssigkeitsfilter**
Liquid filter
Filtre pour un liquide

(30) Priorität: 17.10.1991 DE 4134367
(43) Veröffentlichungstag der Anmeldung: 21.04.1993
(73) Patentinhaber: ROBERT BOSCH GMBH, D-70442 Stuttgart (DE)
(72) Erfinder: Straubel, Max, Dr. Dipl.-Ing., W-7000 Stuttgart 61 (DE); Boehringer, Wilfried, W-7128 Lauffen a.N. (DE); Projahn, Ulrich, Dr. Dipl.-Ing., W-7257 Ditzingen (DE)

(56) Entgegenhaltungen:
- EP-A- 0 213 889
- EP-A- 0 393 277
- EP-A- 0 537 520
- CH-A- 603 215

## Beschreibung

### Stand der Technik

Die Erfindung geht aus von einem Flüssigkeitsfilter, insbesondere zur Reinigung von Kraftstoffen auf Fahrzeugen, nach der im Oberbegriff des Anspruchs 1 näher angegebenen Gattung.

Es ist schon ein solches Flüssigkeitsfilter aus der DE-A-33 12 613 bekannt, das zum Reinigen von Dieselkraftstoffen auf Fahrzeugen verwendet wird und das mit einem Wasserspeicherraum und einer Ablaßschraube ausgerüstet ist. Solche Dieselfilter werden bevorzugt unter der Motorhaube eines Fahrzeuges angeordnet und müssen deshalb beim Aufprall von Fahrzeugen besondere Sicherheitsbedingungen erfüllen. Insbesondere muß unter verschärften CrashBedingungen das Flüssigkeitsfilter auch bei mechanisch starker Verformung noch dicht sein. Zu diesem Zweck ist ein becherförmiges Gehäuseteil dieses Filters aus tiefgezogenem Stahlblech hergestellt und an seinem Rand mit einem Edelstahl-Deckel verschweißt. Im Deckel sind Rohr-Anschlüsse für Zulauf und Ablauf als Schlauchanschlußstutzen ausgebildet und im Deckel fest eingelötet. Auf diese Weise kann das Flüssigkeitsfilter hohe Sicherheitsanforderungen gerade bei Crash-Bedingungen erfüllen, ist widerstandsfähig gegen verschiedene Kraftstoffarten und Wasser, erlaubt ein leichtes Handling und weist zudem ein gutes Aussehen auf.

Nachteilig ist jedoch, daß eine derartige Crash-Sicherheit nur mit relativ hohem Aufwand und damit entsprechend teuer erreichbar ist. Auch lassen sich damit die verschiedenartigen, von Kunden vorgegebenen Bedingungen zur CrashSicherheit nicht immer ausreichend erfüllen.

Ferner wurde in einem älteren Vorschlag der Anmelderin bereits gelehrt, bei einem Kraftstoff-Filter das ganze Gehäuse außen mit einer reißfesten Folie dicht zu umgeben und auf diese Weise den aus der beim Crash verformten Filtereinheit austretenden Kraftstoff in dem flüssigkeitsdichten Beutel aufzufangen. Obgleich mit dieser Bauart viele Bedingungen erfüllbar sind, ist es doch ungünstig, daß der im Kunststoff-Beutel mehr oder weniger lose eingepackte Kraftstoff-Filter weniger schön aussieht. Auch ist die Lage des Beutels außerhalb des Filters ungeschützt und daher der Beutel im Crash-Fall einer größeren Verletzungsgefahr ausgesetzt. Ferner kann es ungünstig sein, wenn bei einem Gehäusefilter mit austauschbarem Filtereinsatz zuerst der Beutel entfernt werden muß, bevor das Filterelement ausgetauscht werden kann.

### Vorteile der Erfindung

Das erfindungsgemäße Flüssigkeitsfilter mit den kennzeichnenden Merkmalen des Anspruchs 1 hat demgegenüber den Vorteil, daß es eine crash-sichere Filterbauweise erlaubt, mit der verschiedenartige, von den Kunden vorgegebene Bedingungen relativ kostengünstig erfüllbar sind. Das Flüssigkeitsfilter ermöglicht somit eine Bauart, die den verschiedensten, heute üblichen Crash-Methoden standhalten dürfte. Durch die Anordnung der Schutzhülle innerhalb des Filtergehäuses wird erreicht, daß bei einem Crash mit anschließender Verformung und Undichtwerden des Filtergehäuses trotzdem kein Kraftstoff umweltschädlich austreten kann, da er innerhalb der weiterhin dichten, ebenfalls mit dem Filtereinsatz verformten Schutzhülle bleibt.

Weiterhin kann auf diese Weise das Filter selbst nach Kostengesichtspunkten optimiert werden. Insbesondere können mit dieser Methode die billigsten Kunststofffilter crash-sicher gemacht werden. Außerdem wird das Aussehen des Flüssigkeitsfilters nicht beeinträchtigt. Zudem lässt sich das Flüssigkeitsfilter so ausbilden, daß bei einem Austausch des Filtereinsatzes automatisch die Schutzhülle mit ausgetauscht wird, so daß hierbei kein zusätzlicher Montageaufwand entsteht.

Durch die in den Unteransprüchen aufgeführten Maßnahmen sind vorteilhafte Weiterbildungen und Verbesserungen des im Hauptanspruch angegebenen Flüssigkeitsfilters möglich. Besonders vorteilhaft kann es sein, die Schutzhülle gemäß Anspruch 2 einteilig auszubilden, wodurch innerhalb des Filtergehäuses lediglich zwei dichte Abbindestellen erforderlich werden, was eine einfache Bauweise begünstigt. Je nach Filterbauart kann es auch zweckmäßig sein, die Schutzhülle zweiteilig oder mehrteilig auszubilden und dabei Bauelemente des Filtereinsatzes selbst für die Schutzhüllenfunktion mit einzube- ziehen. Besonders günstig ist es, wenn für die Schutzhülle ein reiß- festes, folienartiges Plastikmaterial verwendet wird, das den auf- tretenden Beanspruchungen standhält. Ferner kann es auch zweckmäßig sein, daß durch geeignete Stützmittel sichergestellt wird, daß der Kraftstoff-Durchfluß auch bei höherem Differenzdruck nicht behindert wird. Dies gilt insbesondere bei saugseitig angeordneten Filtern, bei denen im Betrieb Unterdruck auftreten kann. Dabei ist es günstig, wenn solche Stützelemente als definiert verformbare Stütz- scheiben mit abgerundeten Kanten zwischen Schutzhülle und Filterein- satz angeordnet werden, um einen ausreichenden Zuflußquerschnitt sicherzustellen. Zweckmäßig ist ferner, daß sich das vorgeschlagene Flüssigkeitsfilter für unterschiedliche Bauarten von Filtereinsätzen eignet, die sowohl als Wickelelement oder auch als Sternelement aus- gebildet werden können.

Besonders günstig ist es, wenn das Flüssigkeitsfilter als Gehäusefilter mit abnehmbaren Deckel und austauschbarem Filtereinsatz ausgebildet wird. Besonders vorteilhaft sind Ausgestaltungen des Flüssigkeitsfilters, an denen die Anschlüsse für Zulauf und Ablauf so gestaltet sind, daß bei einer Verformung des Gehäuses auch hier kein Kraftstoff austreten kann. Dies wird bevorzugt dadurch erreicht, daß hierbei elastische Elemente verwendet werden, die trotz ihrer Formstabilität in gewissen Grenzen soweit nachgiebig und weich sind, daß sie die Anschlußtechnik unempfindlich gegen Stöße machen und dadurch hohe Anforderungen im Crash-Test erfüllen können. Weitere zweckmäßige Ausgestaltungen und Verbesserungen ergeben sich aus den übrigen Ansprüchen, der Beschreibung und der Zeichnung.

### Zeichnung

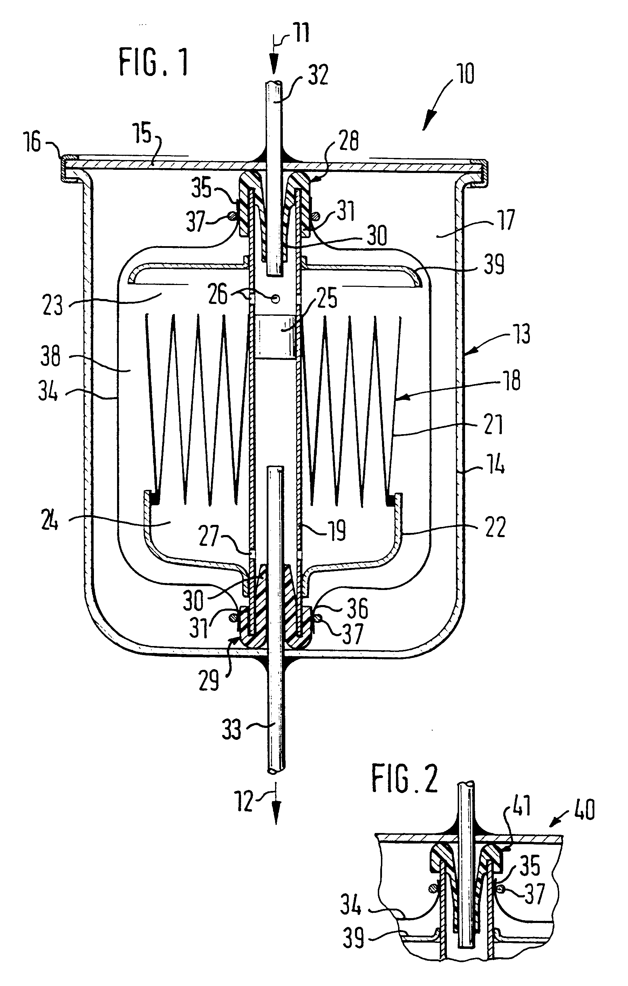

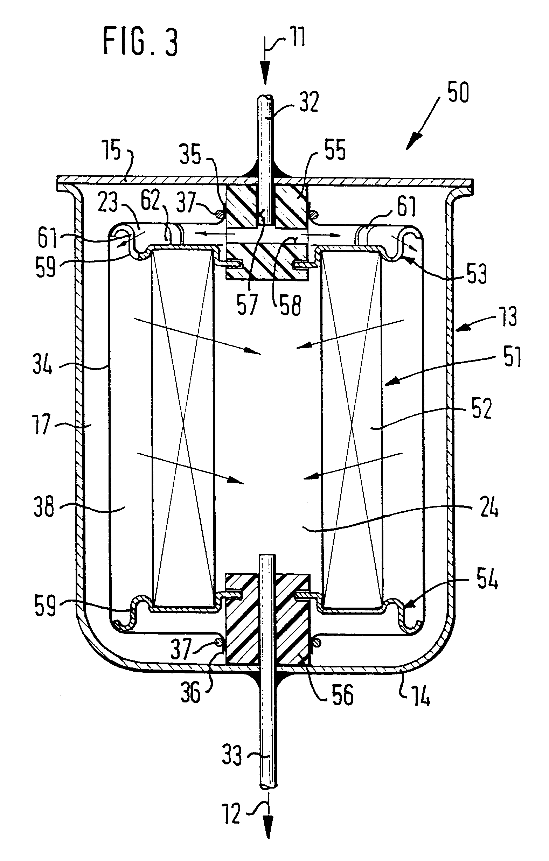

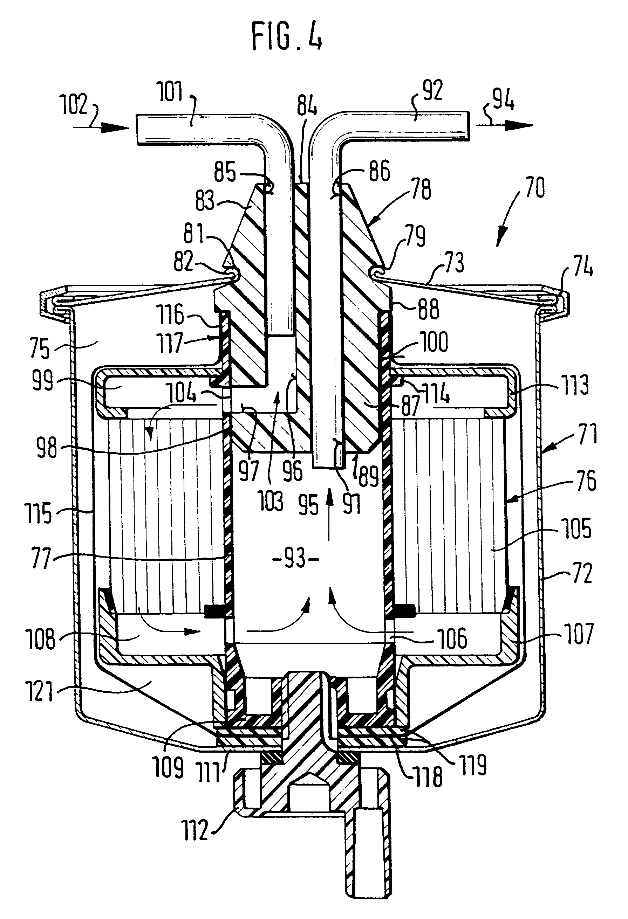

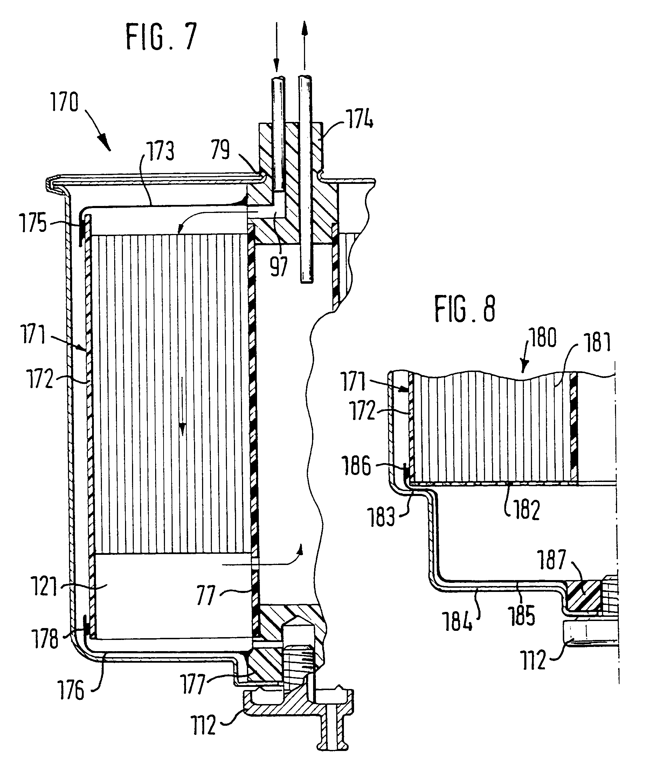

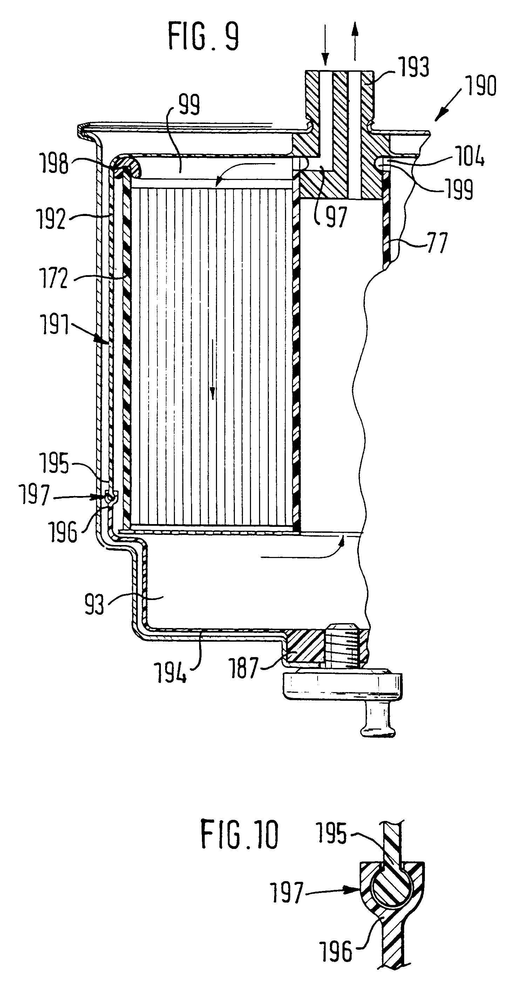

Mehrere Ausführungsbeispiele der Erfindung sind in der Zeichnung dargestellt und in der nachfolgenden Beschreibung näher erläutert. Es zeigen Figur 1 ein erstes Ausführungsbeispiel eines Flüssigkeitsfilters in vereinfachter Darstellung, Figur 2 einen Teilschnitt eines zweiten Ausführungsbeispieles mit geänderter Schutzhüllenbefestigung, Figur 3 einen Längsschnitt durch ein drittes Flüssigkeitsfilter mit Sterneinsatz in vereinfachter Darstellung, die Figuren 4, 5 und 6 jeweils einen Längsschnitt durch ein viertes, fünftes bzw. sechstes Ausführungsbeispiel des Flüssigkeitsfilters in vereinfachter Darstellung, die Figuren 7, 8 und 9 jeweils einen Teilschnitt durch ein siebtes bis neuntes Ausführungsbeispiel und Figur 10 eine Einzelheit des Flüssigkeitsfilters nach Figur 9.

### Beschreibung der Ausführungsbeispiele

Die Figur 1 zeigt einen Längsschnitt durch ein Flüssigkeitsfilter 10 in vereinfachter Darstellung, das zum Reinigen von Kraftstoff dient. Das Flüssigkeitsfilter 10 ist als Gehäusefilter und in Leitungsfilterbauart ausgebildet, bei dem ein Zulauf 11 und ein Ablauf 12 auf entgegengesetzten Stirnseiten eines Gehäuses 13 angeordnet sind.

Das Gehäuse 13 hat ein becherförmiges Gehäuseteil 14, an dem ein Deckel 15 mit Hilfe eines lösbaren Spannrings 16 dicht und fest befestigt ist. Das Gehäuse 13 nimmt in seinem Innenraum 17 einen Filtereinsatz auf, der hier als Wickelelement 18 ausgebildet ist. Das Wicklelelement 18 besteht im wesentlichen aus einem Mittelrohr 19, einem axial durchströmten Wickel 21 und einem becherförmigen Bodenteil 22, die in an sich bekannter Weise so miteinander befestigt sind, daß sie eine Schmutzseite 23 von einer Reinseite 24 trennen. Zudem ist innerhalb des Mittelrohrs 19 ein Stopfen 25 angeordnet, der im Mittelrohr 19 liegende, zulaufseitige Radialbohrungen 26 von den ablaufseitigen Radialbohrungen 27 trennt.

Das Mittelrohr 19 erstreckt sich über die gesamte axiale Länge des Gehäuses 13 und ist mit Hilfe einer oberen Profilringdichtung 28 am Deckel 15 und mittels einer gleichartigen unteren Profilringdichtung 29 am Boden des becherförmigen Gehäuseteils 14 dichtend abgestützt. Bei diesen Profilringdichtungen 28, 29 handelt es sich um untereinander gleiche, elastische Dichtungen, die zum Beispiel aus Gummi oder einem elastischen Kunststoff ausgeführt werden können. Die Profilringdichtungen 28, 29 haben im wesentlichen einen etwa U-förmigen Querschnitt und ragen mit einer inneren, hülsenförmigen Stulpe 30 jeweils in die beiden Enden des Mittelrohrs 19 hinein, während sie mit äußeren, hülsenförmigen Stulpen 31 jeweils die Enden des Mittelrohrs 19 an seinem Außenumfang dicht umschließen. In die innere Stulpe 30 der oberen Profilringdichtung 28 ragt ein dem Zulauf 11 zugeordneter Rohrstutzen 32 hinein, der durch den Deckel 15 hindurchgeführt ist und damit innerhalb des Mittelrohrs 19 dicht und elastisch gehalten ist. Über den Rohrstutzen 32 steht der Zulauf 11 mit der Schmutzseite 23 in Verbindung. In entsprechender Weise ist durch den Boden des becherförmigen Gehäuseteils 14 ein Rohrstutzen 33 von unten her in das Mittelrohr 19 eingeführt, und durch die innere Stulpe 30 der unteren Profilringdichtung 29 in elastischer Weise und dicht gehaltert. Der Rohrstutzen 33 ragt dabei weit über die ablaufseitigen Radialbohrungen 27 in das Mittelrohr 19 hinein, um ein Absaugen von abgeschiedenem Wasser zu verhindern.

Wie Figur 1 ferner zeigt, weist das Flüssigkeitsfilter 10 eine im Innenraum 17 des Gehäuses 13 angeordnete, das Wickelelement 18 vollkommen und dicht umschließende Schutzhülle 34 auf. Die Schutzhülle 34 besteht hier aus einem reißfesten, flexiblen, dichten und folienartigen Plastikmaterial, das hier einteilig und schlauchartig ausgebildet ist und an seinen beiden Enden 35, 36 jeweils mit Hilfe eines Halterings 37 am Außendurchmesser der elastischen Profilringdichtungen 28 bzw. 29 dicht und fest abgebunden ist. Die Schutzhülle 34 bildet auf diese Weise einen vom Innenraum 17 getrennten Auffangraum 38, in dem das Wickelelement 18 angeordnet ist. Innerhalb dieses Auffangraumes 38 ist auf der Schmutzseite 23 am Mittelrohr 19 im Bereich zwischen den zulaufseitigen Radialbohrungen 26 und der oberen Profilringdichtung 28 eine Stützscheibe 39 befestigt, die mit ihrem abgerundeten, äußeren Rand zwischen Schutzhülle 34 und Filtereinsatz 18 liegt und einen ausreichenden Zuflußquerschnitt auch dann sicherstellt, wenn das Filter 10 saugseitig geschaltet ist und im Betrieb Unterdruck auftreten kann.

Die folienartige Schutzhülle 34 kann einmal als Schlauch mit gleichmäßigem Durchmesser ausgebildet werden. Die Enden 35 und 36 der schlauchförmigen Schutzhülle 34 müssen dann mit normalen Halteringen 37 an den elastischen Profilringdichtungen 28 bzw. 29 abgebunden werden. Um dieses Abbinden zu erleichtern ist es auch möglich, die Schutzhülle 34 sackartig mit einem einseitig kleinen Schlauchfortsatz auszubilden, so daß das Abbinden an einem Ende der Schutzhülle einfacher durchführbar ist. Darüberhinaus ist es auch möglich, die Schutzhülle 34 nach Art eines Schrumpfschlauches auszuführen, wobei durch Wärmeeinwirkung zumindest auf die Enden 35, 36 der Schutzhülle deren Durchmesser verringert wird und dadurch das Abbinden erleichtert wird.

Die Wirkungsweise des Flüssigkeitsfilters 10 wird wie folgt erläutert: Der am Zulauf 11 zuströmende Kraftstoff gelangt über den Rohrstutzen 32 in den oberen Teil des Mittelrohrs 19, fließt durch die zulaufseitigen Radialbohrungen 26 auf die Schmutzseite 23 und gelangt nach dem Durchströmen des Wickels 21 gereinigt auf die Reinseite 24. Von dort strömt der gereinigte Kraftstoff über die ablaufseitigen Radialbohrungen 27 in den unteren Teil des Mittelrohrs 19 und kann über den ablaufseitigen Rohrstutzen 33 zum Ablauf 12 abströmen. Durch die Schutzhülle 34 wird dabei verhindert, daß Kraftstoff aus dem Auffangraum 38 austreten und in den Innenraum 17 des Gehäuses 13 gelangen kann. In dem zwischen Gehäuse 13 und Schutzhülle 34 befindlichen Teil des Innenraumes 17 kann sich daher Luft befinden.

Wird nun bei einem Crash das Filtergehäuse 13 verformt und undicht, so kann trotzdem kein Kraftstoff umweltschädlich austreten, da er innerhalb der weiterhin dichten, ebenfalls mit dem Filtergehäuse 13 verformten Schutzhülle 34 verbleibt. In vorteilhafter Weise sind dabei die Anschlüsse für Zulauf 11 und Ablauf 12 so gestaltet, daß auch bei deren Verformung kein Kraftstoff dort austreten kann. Diese Anschlüsse sind durch die elastischen Profilringdichtungen 28, 29 so gestaltet, daß die Rohrstutzen 32 und 33 auch dann noch abgedichtet werden, wenn sich bei einem Crash deren Lage und Richtung im Gehäuse 13 verändert hat. Die Stützscheibe 39 kann dabei so ausgebildet werden, daß sie sich bei einem Crash in definierter Weise verformt und dabei die Schutzhülle 34 nicht verletzt. Durch die Anordnung der Schutzhülle 34 innerhalb des Gehäuses 13 wird das äußere Aussehen des Flüssigkeitsfilters 10 nicht nachteilig beeinträchtigt. Die Lage der Schutzhülle 34 innerhalb des Gehäuses 13 hat auch den Vorteil, daß sie insbesondere in einem Motoreinbauraum eines Fahrzeugs einer wesentlich geringeren Verletzungsgefahr ausgesetzt ist.

Besonders günstig ist ferner, daß bei einem Austausch des Filtereinsatzes 18 nach dem Öffnen des Deckels 15 der gesamte Wickeleinsatz 18 einschließlich der ihn umgebenden Schutzhülle 34 als eine Einheit auswechselbar ist und danach umweltschonend entsorgt werden kann, während das Filtergehäuse 13 in einem Fahrzeug weiterhin verwendbar ist.

Die Figur 2 zeigt einen Längsschnitt durch einen Teil eines zweiten Flüssigkeitsfilters 40, das sich vom ersten Flüssigkeitsfilter 10 nach Figur 1 lediglich dadurch unterscheidet, daß es eine andere Profilringdichtung 41 aufweist, an welcher die äußere Stulpe 31 kürzer ausgebildet ist, so daß das Ende 35 der Schutzhülle 34 am Außendurchmesser des Mittelrohrs 19 mit Hilfe des Halterings 37 abgebunden wird. Die Abbindung der Schutzhülle 34 mit ihrem Ende 36 im Bereich des ablaufseitigen Rohrstutzens 33 kann entsprechend ausgebildet werden und ist nicht näher gezeichnet. Auf diese Weise ist die Profilringdichtung 41 losgelöst von der Abbindestelle der Schutzhülle 34, was in bestimmten Anwendungsfällen vorteilhaft sein kann.

Die Figur 3 zeigt einen Längsschnitt durch ein drittes Flüssigkeitsfilter in vereinfachter Darstellung, das sich vom ersten Flüssigkeitsfilter 10 nach Figur 1 vor allem dadurch unterscheidet, daß es anstelle eines Wickeleinsatzes als Filterelement einen Sterneinsatz 51 aufweist. Im übrigen sind gleiche Bauelemente wie in Figur 1 mit gleichen Bezugszeichen versehen.
Bei dem Sterneinsatz 51 ist ein Papierstern 52 in an sich bekannter Weise zwischen zwei stirnseitigen Abdeckkappen 53 und 54 angeordnet. In die obere Abdeckkappe 53 ist ein oberer Dichtstopfen 55 dicht und fest eingebaut, über den sich der Sterneinsatz 51 am Deckel 15 des Gehäuses 13 abstützt. In entsprechender Weise ist in der unteren Abdeckkappe 54 ein unterer Dichtstopfen 56 befestigt, mit dem sich der Sterneinsatz 51 am Boden des becherförmigen Gehäuseteils 14 abstützt. Die beiden Dichtstopfen 55 und 56 sind aus weichem Gummi oder aus einem geeigneten Kunststoff mit entsprechender Elastizität ausgebildet, so daß sie die notwendigen Dichtund Haltefunktionen übernehmen können. Der untere Dichtstopfen 56 wird von dem koaxial im Gehäuse 13 angeordneten Rohrstutzen 33 durchdrungen, welcher den Ablauf 12 mit der Reinseite 24 im Sterneinsatz 51 verbindet. Im oberen Dichtstopfen 55 ragt der mit dem Zulauf 11 verbundene Rohrstutzen 32 durch den Deckel 15 hindurch in eine zentrale, sacklochartige Bohrung 57, von der aus sternförmig angeordnete Radialkanäle 58 auf die Schmutzseite 23 des Sterneinsatzes 51 führen. An den beiden Abdeckkappen 53 und 54 sind an deren äußerem Umfang jeweils schräg nach außen ragende Haltearme 59 mit abgerundetem freien Rand ausgebildet, welche die Schutzhülle 34 im Abstand vom eigentlichen Sterneinsatz 51 halten. Zumindest an der oberen Abdeckkappe 53 sind zwischen den einzelnen Haltearmen 59 Durchtrittsöffnungen 61 ausgebildet, damit der über die Radialkanäle 58 zuströmende Kraftstoff oberhalb der Abdeckkappe 53 radial nach außen strömen kann und über diese Durchtrittsöffnungen 61 zur schmutzseitigen Eintrittsöffnung des Papiersterns 52 gelangen kann. Die einteilig und schlauchförmig ausgebildete Schutzhülle 34 ist mit ihren beiden Enden 35 bzw. 36 mit Hilfe der Halteringe 37 jeweils an dem Außenumfang der Dichtstopfen 55 bzw. 56 dicht abgebunden. Am oberen Dichtstopfen 55 liegt dabei die Abbindestelle so weit im Abstand von der oberen Abdeckkappe 53, daß zwischen den zueinander parallel verlaufenden Teilen der Abdeckkappe 53 und der Schutzhülle 34 ein ausreichend großer Ringraum 62 gebildet ist, der mit den Durchtrittsöffnungen 61 verbunden ist. Bei dem Flüssigkeitsfilter 50 kann somit trotz der Bauart als Gehäusefilter und Leitungsfilter ein Sterneinsatz 51 verwendet werden, der ebenfalls im Innenraum 17 des Gehäuses 13 von einer Schutzhülle 34 dicht umgeben wird, die einen abgegrenzten Auffangraum 38 bildet.

Die Wirkungsweise des dritten Flüssigkeitsfilters 50 entspricht daher in Bezug auf seine Crash-Sicherheit derjenigen des Flüssigkeitsfilters 10 nach Figur 1, wobei lediglich ein radial durchströmter Sterneinsatz 51 die Reinigungsfunktion übernimmt. Im übrigen weist das Flüssigkeitsfilter 50 infolge seiner Dichtstopfen 55, 56 aus elastischem Gummi bzw. vergleichbarem Kunststoff eine Anschlußtechnik auf, die gegen äußere Stöße relativ unempfindlich ist.

Die Figur 4 zeigt einen Längsschnitt durch ein viertes Flüssigkeitsfilter 70 in vereinfachter Darstellung, das sich von den Filtern nach Figur 1 und Figur 3 vor allem durch eine andere Anschlußtechnik für Zulauf, Ablauf und Filtereinsatz unterscheidet.
Das Flüssigkeitsfilter 70 hat ein Gehäuse 71, an dessen becherförmigem Gehäuseteil 72 ein Deckel 73 mit Hilfe eines lösbaren Spannrings 74 dicht und fest befestigt ist. Das Gehäuse 71 nimmt in seinem Innenraum 75 als Filtereinsatz ein Wickelelement 76 auf, das mit Hilfe seines Mittelrohres 77 an einem Anschlußstopfen 78 angeschlossen ist.

Der Anschlußstopfen 78 besteht aus einem weichen Gummi, der neben ausreichender Formstabilität eine genügend große Elastizität aufweist, um gegen Stöße von außen möglichst unempfindlich zu sein.

Der Anschlußstopfen 78 weist an seinem Außenumfang eine Ringnut 79 auf, in welche der Deckel 73 mit seinem an einer zentralen Öffnung 81 gelegenen, umgebogenen Rand 82 eingesetzt ist. Die Durchmesser von Ringnut 79 und Öffnung 81 sind so aufeinander abgestimmt, daß der Anschlußstopfen 78 den Innenraum 75 des Gehäuses 71 nach außen einwandfrei abdichtet und der Anschlußstopfen 78 fest und doch elastisch im Deckel 73 befestigt ist. Der Anschlußstopfen 78 bildet außerhalb des Gehäuses 71 einen konischen Abschnitt 83, der durch eine Stirnseite 84 mit zwei Öffnungen 85 bzw. 86 für einen Zulauf und einen Ablauf begrenzt ist.

Der Anschlußstopfen 78 ragt vom Deckel 73 aus mit einem im wesentlichen zylindrischen Abschnitt 87 in den Innenraum 75 hinein, wobei am zylindrischen Abschnitt 87 eine Schulter 88 zum Anschlag des Mittelrohrs 77 ausgebildet ist. Der zylindrische Abschnitt 87 wird von einer innenliegenden Stirnfläche 89 begrenzt, von der eine durchgehende, parallel zur Längsachse des Filters 70 verlaufende Bohrung 91 zur ablaufseitigen Öffnung 86 in der ersten Stirnseite 84 führt. In diese Bohrung 91 ist ein den Anschlußstopfen 78 vollkommen durchdringender Rohrstutzen 92 eingeschoben, welcher einen von der Reinseite 93 im Wickelelement 76 zum Ablauf 94 führenden Ablaufkanal 95 bildet.

In dem Anschlußstopfen 78 verläuft ausgehend von der zulaufseitigen Öffnung 85 in der Stirnseite 84 eine sacklochartige Bohrung 96 parallel zur Bohrung 91, von derem innenliegenden Ende eine Radialbohrung 97 in die Mantelfläche 100 des zylindrischen Abschnitts 87 führt. Die Radialbohrung 97 mündet dabei in einem Bereich der Mantelfläche 100, in dem das auf dem zylindrischen Abschnitt 87 aufgeschobene Mittelrohr 77 dicht und fest anliegt und so nach beiden Seiten der Radialbohrung 97 Dichtstellen bildet. Dabei liegt eine Dichtstelle 98 zwischen der Radialbohrung 97 und der inneren Stirnfläche 89 und trennt dadurch die Reinseite 93 von einer Schmutzseite 99. In die sacklochartige Bohrung 96 ist ein Rohrstutzen 101 eingeschoben, welcher einen vom Zulauf 102 zur Schmutzseite 99 führenden Zulaufkanal 103 bildet. Das Mittelrohr 77 weist zu diesem Zweck eine koaxial zur Radialbohrung 97 liegende Durchgangsöffnung 104 auf. Ferner sind im Mittelrohr 77 unterhalb des eigentlichen Wickels 105 Querbohrungen 106 angeordnet, über welche das Innere des Mittelrohrs 77 mit einem von einem becherförmigen Bodenteil 107 gebildeten Ringraum 108 in Verbindung steht. Das Mittelrohr 77 stützt sich mit seinem unteren, geschlossenen Ende 109 an einem Boden 111 des becherförmigen Gehäuseteils 72 ab und nimmt eine zum Ablassen von Wasser dienende Verschlußschraube 112 auf, welche durch den Boden 111 hindurchgeführt ist und mit dem Ende 109 verschraubt ist.

Am Wickel 105 ist auf der dem Bodenteil 107 gegenüberliegenden Seite ein als Stützmittel dienender Stützring 113 angeordnet, der sich mit seinem äußeren Rand unmittelbar auf dem Wickel 105 abstützt und mit seinem innenliegenden Rand auf einem Bund 114 des Mittelrohrs 77 aufliegt und dadurch eine der Schmutzseite 99 zugeordnete Ringkammer darstellt, die mit dem Zulaufkanal 103 verbunden ist.

Das in das Gehäuse 71 eingebaute Filterelement 76 ist zur Erfüllung von Sicherheitsbedingungen, insbesondere bei Crash-Tests, von einer geschlossenen, druckmitteldichten Schutzhülle 115 umgeben, die innerhalb des Gehäuses 71 angeordnet ist. Diese Schutzhülle 115 besteht aus einer extrem reißfesten und flexiblen Folie aus Plastikmaterial, die hier einteilig und somit schlauchförmig ausgebildet ist. Mit ihrem oberen Ende 116 ist die Schutzhülle 115 an einem den Stützring 113 überragenden Endabschnitt des Mittelrohrs 77 durch eine Klebestelle 117 dicht und fest verbunden. Mit ihrem unteren Ende 118 ist die Schutzhülle 115 in axialer Richtung zwischen dem Mittelrohr-Ende 109 und dem Gehäuse-Boden 111 dicht und fest eingespannt, wobei das Ende 118 zweckmäßigerweise zwischen zwei Flachdichtringe 119 gelegt ist, die in vorteilhafter Weise einstückig mit dem Ende 118 der Schutzhülle 115 ausgebildet werden können. Die Schutzhülle 115 begrenzt somit einen vom Innenraum 75 abgetrennten, das Wickelelement 76 aufnehmenden Auffangraum 121.

Beim vierten Flüssigkeitsfilter 70 kann wie beim Flüssigkeitsfilter 10 nach Figur 1 bei einem Crash das Filtergehäuse verformt und undicht werden, wobei trotzdem kein Kraftstoff umweltschädlich austreten kann, da er innerhalb der weiterhin dichten, ebenfalls mit dem Wickeleinsatz 76 verformten Schutzhülle 115 bleibt. Bei den unter Crash-Bedingungen auftretenden Verformungen des Gehäuses 71 ist die Schutzhülle 115 gegen die störende Einwirkung scharfkantiger Teile gut geschützt und kann daher ihre Sicherheitsfunktion besser erfüllen.

Bei dem Flüssigkeitsfilter 70 ermöglicht der aus Gummi bestehende Anschlußstopfen 78 eine Anschlußtechnik, die nicht nur universell einsetzbar ist, sondern sich auch bei Crash-Bedingungen bewährt. Bei der Montage des Flüssigkeitsfilters 70 kann der weiche, elastische Gummistopfen 78 zunächst von unten her in die runde Öffnung 81 im Deckel 13 eingesetzt werden, wobei der konische Abschnitt 83 diesen Einbau erleichtert. Dabei wird eine dichte, feste und auch elastische Verbindung der Bauelemente erreicht. Von unten her wird dann auf den zylindrischen Abschnitt 87 des Anschlußstopfens 78 das Wickelelement 76 mit seinem Mittelrohr 77 aufgeschoben, wobei der gummiartige Anschlußstopfen 78 im Bereich seiner Mantelfläche eine allseitige Abdichtung für die Radialbohrung 97 bildet. Das Wickelelement 76 kann dabei bereits von seiner Schutzhülle 115 umgeben sein. In den Anschlußstopfen 78 werden dann von oben her durch die Öffnungen 85 und 86 die glatten Rohrstutzen 101 bzw. 92 in die Bohrungen 96 bzw. 91 eingeschoben. Beim Einschieben der Rohre 101, 92 erhöht sich die Vorspannung in dem Anschlußstopfen 78, wodurch die Abdichtwirkung gegenüber dem Deckel 13 und dem Mittelrohr 77 verstärkt wird. Die Baugruppe aus Deckel 73, Anschlußstopfen 78 und Wickelelement 76 wird anschließend in das becherförmige Gehäuseteil 72 eingebaut und der Deckel 73 mit Hilfe des Spannrings 74 befestigt. Der Anschlußstopfen 78 aus weichem Gummi ermöglicht bei dieser Anschlußtechnik in gewissen Grenzen eine Elastizität, welche die Befestigungen und Abdichtungen unempfindlich macht gegen Stöße, so daß sie sich besonders bei den Bedingungen im Crash-Test gut bewähren. Mit Hilfe der Verschlußschraube 112 wird das Mittelrohr-Ende 109 in axialer Richtung mit dem Boden 111 des becherförmigen Gehäuseteils verspannt, wobei das Ende 118 der Schutzhülle 115 mit den zugeordneten Flachdichtringen 119 dicht und fest eingespannt wird. Zum Ablassen von Wasser lässt sich die Verschlußschraube 112 in an sich bekannter Weise öffnen.

Die Wirkungsweise des Flüssigkeitfilters 70 ist im wesentlichen wie folgt: Vom Zulauf 102 über den Zulaufkanal 103 auf die Schmutzseite 99 strömender Kraftstoff durchströmt axial den Wickel 105 und tritt gereinigt im Ringraum 108 aus. Von dort gelangt der gereinigte Kraftstoff über die Querbohrungen 106 auf die Reinseite 93 im Innern des Mittelrohrs 77 und über den Ablaufkanal 98 zum Ablauf 94. Auf der Reinseite 108 abgeschiedenes Wasser kann über die Verschlußschraube 112 entfernt werden. Durch das Bodenteil 107 einerseits und andererseits den Stützring 113 auf der Schmutzseite 99 ist sichergestellt, daß trotz der Schutzhülle 115 ausreichende Zuflußquerschnitte bereitgestellt werden, auch wenn das Filter 70 im Saugbetrieb verwendet wird soll und dabei Unterdruck auftreten kann.

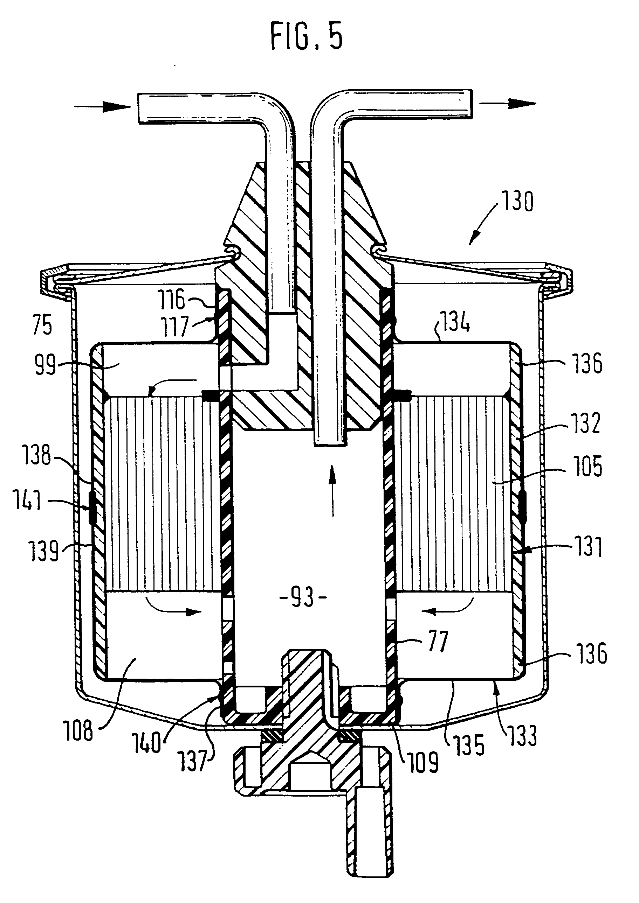

Die Figur 5 zeigt einen Längsschnitt durch ein fünftes Flüssigkeitsfilter 130, das sich vom vierten Flüssigkeitsfilter 70 nach Figur 4 wie folgt unterscheidet, wobei für gleiche Bauelemente gleiche Bezugszeichen verwendet werden.

Das fünfte Flüssigkeitsfilter 130 weist ein anderes Wickelelement 131 auf, das mit einem Außenrohr 132, insbesondere aus Pappe, ausgebildet ist. Ferner ist die Schutzhülle 133 zweiteilig mit einem Oberteil 134 und einem Unterteil 135 ausgebildet. Das Außenrohr 132 überragt den Wickel 105 in axialer Richtung auf beiden Stirnseiten und hat einen der Schmutzseite 99 zugeordneten, überstehenden Rand 136 sowie einen der Reinseite 108 zugeordneten, überstehenden Rand 136. Diese beiden Ränder 136 dienen als Stützmittel für die Schutzhülle 133, um die notwendigen Durchflussquerschnitte bzw. Räume sicherzustellen. Das Oberteil 134 der Schutzhülle 133 ist wie bisher mit seinem oberen Ende 116 in der Klebestelle 117 abgebunden. In entsprechender Weise ist das untere Ende 137 des Unterteils 135 in einer gleichartigen Klebestelle 140 an der Mantelfläche des Mittelrohr-Endes 109 dicht befestigt. Das außenliegende Ende 138 des Oberteils 134 sowie das entsprechende Ende 139 des Unterteils 135 sind in einer Klebestelle 141 dicht und fest miteinander verbunden, die auf der Umfangsfläche des Außenrohrs 132 angeordnet ist.

Wirkungsweise und Funktion des fünften Flüssigkeitsfilters 130 entsprechen sinngemäß derjenigen des vierten Flüssigkeitsfilters 70 nach Figur 4. Durch das Außenrohr 132 lässt sich das Wickelelement 131 aus weniger Bauelementen herstellen und für die Schutzhülle 131 lassen sich gleichartige Klebestellen 117, 140, 141 ausbilden. Die zweiteilige Ausbildung der Schutzhülle 131 kann je nach Anwendungsfall vorteilhaft sein.

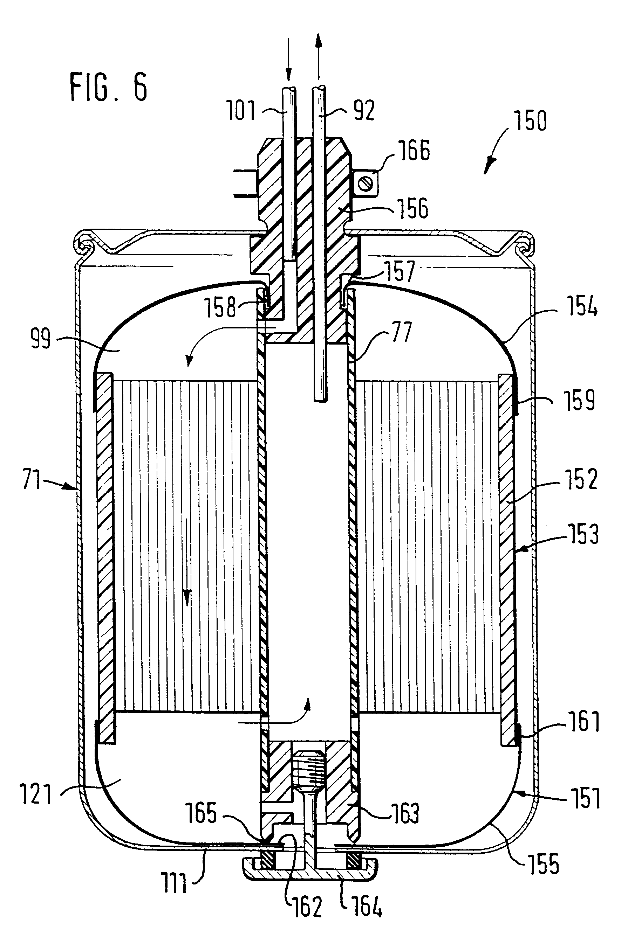

Die Figur 6 zeigt einen Längsschnitt durch ein sechstes Flüssigkeitsfilter 150 in vereinfachter Darstellung, das sich vom vierten Flüssigkeitsfilter 70 nach Figur 4 wie folgt unterscheidet, wobei für gleiche Bauelemente gleiche Bezugszeichen verwendet werden: Das sechste Flüssigkeitsfilter 150 weist vor allem eine dreigliedrige Schutzhülle 151 auf, indem das Außenrohr 152 des Wickeleinsatzes 153 für diese Schutzfunktion mit herangezogen wird.

Das vorzugsweise aus Pappe bestehende Außenrohr 152 wird zu diesem Zweck entsprechend imprägniert oder mit einer geeigneten flüssigkeitsdichten Kunststoffauflage versehen, so daß es ein Teil der Schutzhülle 151 bilden kann. Die Schutzhülle 151 weist ferner ein schalenförmiges Oberteil 154 sowie ein schalenförmiges Unterteil 155 auf, die beide aus einem reißfesten, folienförmigen Plastikmaterial bestehen und als Formteile herstellbar sind. Der Anschlußstopfen 156, der ebenfalls aus Gummi herstellbar ist, weist eine flache Ringnut 157 auf, in die das Oberteil 154 mit einem passenden Kragen 158 eingesetzt ist und durch das aufgeschobene Mittelrohr 77 dicht und fest eingespannt ist. An seinem Außendurchmesser ist das Oberteil 154 mit der Außenwand des Außenrohrs 152 durch eine Klebestelle 159 dicht und fest verbunden. In entsprechender Weise ist der Außenrand des Unterteils 155 durch eine Klebestelle 161 dicht und fest mit dem Außenrohr 152 verbunden, während das Unterteil 155 mit seinem Innenrand 162 zwischen dem Boden 111 des Gehäuses 71 und einem Verschlußstopfen 163 axial eingespannt ist, wozu in letzteren eine Verschlußschraube 164 greift. Der Verschlußstopfen 163 kann aus geeignetem Kunststoff gemacht werden und übernimmt zugleich die Abdichtung zum Mittelrohr 77. Die Klebestellen 159 und 161 am Außenrohr 152 liegen dabei möglichst weit auseinander, so daß der Aufwand für die Schutzhülle 151 niedrig gehalten wird. Die Funktion der Stützmittel zur Sicherstellung des Durchflußquerschnitts kann dabei zugleich vom Außenrohr 152 in Verbindung mit den als Formteilen ausgebildeten Oberteil 154 bzw. Unterteil 155 übernommen werden. Günstig ist es dabei, wenn zur Erzielung einer besseren Dichtwirkung am Verschlußstopfen 163 eine geeignete Dichtkante 165 ausgebildet ist. Der Anschlußstopfen 156 weist an seinem aus dem Deckel herausragenden Abschnitt einen zylindrischen Bereich auf, in dem eine Schlauchklemme 166 angeordnet ist, um so die Rohrstutzen 101 bzw. 92 gegen ein Herausziehen zu sichern.

Die Wirkungsweise und Funktion des sechsten Flüssigkeitsfilters 150 entspricht sinngemäß derjenigen des vierten Flüssigkeitsfilters 70 nach Figur 4, wobei nun anstelle einer einteiligen Schutzhülle 115 eine dreigliedrige Schutzhülle 151 die Sicherheitsfunktion im Crash-Fall übernimmt.

Die Figur 7 zeigt einen teilweisen Längsschnitt durch ein siebtes Flüssigkeitsfilter 170 in vereinfachter Darstellung, das vom Aufbau her durch seine dreigliedrige Schutzhülle 171 mit dem sechsten Flüssigkeitsfilter 150 nach Figur 6 verwandt ist. Beim siebten Flüssigkeitsfilter 170 wird zwar wiederum das Außenrohr 172 zum Aufbau der Schutzhülle 171 verwendet, jedoch ist hier das Oberteil 173 der Schutzhülle 171 einstückig mit dem Anschlußstopfen 174 ausgebildet. Der Anschlußstopfen 174 kann dabei wiederum aus weichem Gummi oder geeignetem Kunststoff bestehen, an dem das kappenförmige Oberteil 173 unmittelbar angeformt ist im Bereich zwischen der Ringnut 79 im Anschlußstopfen 174 und der Radialbohrung 97. Der äußere Rand des Oberteils 173 wird mit der Außenwand des Außenrohrs 172 wiederum verklebt oder verschweißt an einer Abdichtstelle 175. In entsprechender Weise wie das Oberteil 173 ist auch das Unterteil 176 einstückig mit dem Verschlußstopfen 177 ausgebildet, in dem die Verschlußschraube 112 sitzt. Auch der Verschlußstopfen 177 kann aus Gummi oder geeignetem Kunststoff hergestellt werden und zugleich die Abstützung des Mittelrohrs 77 übernehmen. Das Unterteil 176 ist mit seinem äußeren Rand in entsprechender Weise an der Abdichtstelle 178 dicht und fest mit dem Außenrohr 172 verbunden, so daß die Schutzhülle 171 den Wickeleinsatz druckmitteldicht umhüllt. Durch die integrierte Ausbildung von Oberteil 173 und Unterteil 176 am Anschlußstopfen 174 bzw. am Verschlußstopfen 177 lassen sich die Abbindestellen der Schutzhülle 171 in den Bereichen mit relativ kleinem Außendurchmesser einsparen, was eine einfachere Herstellung begünstigt.

Die Figur 8 zeigt einen Teilschnitt durch ein achtes Flüssigkeitsfilter 180 in vereinfachter Darstellung, das sich von dem siebten Flüssigkeitsfilter 170 nach Figur 7 vor allem dadurch unterscheidet, daß es einen Wickeleinsatz 181 aufweist, der sich über ein Lochblech 182 auf einer Gehäuseschulter 183 im becherförmigen Gehäuseteil 184 abstützt. Das Unterteil 185 der ebenfalls dreigliedrig ausgebildeten Schutzhülle 171 ist nun über die Gehäuseschulter 183 hochgezogen und an der Abdichtstelle 186 mit dem Außenrohr 172 dicht und fest verbunden. Ein als Außensechskant ausgebildeter Verschlußstopfen 187 ist in das Unterteil 185 integriert und nimmt das Innengewinde für die Verschlußschraube 112 auf. Der Verschlußstopfen 187 kann vollständig aus Kunststoff hergestellt werden oder auch so ausgebildet werden, daß er eine einvulkanisierte Stahlmutter aufnimmt.

Die Figur 9 zeigt einen teilweisen Längsschnitt durch ein neuntes Flüssigkeitsfilter 190 in vereinfachter Darstellung, das durch seine Bauweise der Schutzhülle 191 mit den Flüssigkeitsfiltern nach Figur 7 und Figur 8 verwandt ist. Beim neunten Flüssigkeitsfilter 190 ist das Oberteil 192 der Schutzhülle 191 ebenfalls einstückig mit dem Anschlußstopfen 193 ausgebildet, während das Unterteil 194 der Schutzhülle 191 einstückig mit dem Verschlußstopfen 187 ausgebildet ist. Oberteil 192 und Unterteil 194 sind jedoch in axialer Richtung jeweils so lang ausgebildet, daß ihre Ränder 195 bzw. 196 durch einen Klemmverschluß 197 dicht und fest miteinander verbunden sind. Dieser Klemmverschluß 197 kann nach Art eines Schnappverschlusses ausgebildet werden, der in der Figur 10 als Einzelheit in vergrößertem Maßstab dargestellt ist. Es ist aber auch möglich, andere Klemmverschlüsse zu wählen, zum Beispiel nach Art eines Reißverschlusses oder einen Leistenverschluß, wie er bei Frischhaltebeuteln üblich ist. Um hier Schmutzseite 99 und Reinseite 93 voneinander zu trennen, ist am oberen Ende des Außenrohrs 172 ein im Querschnitt U-förmiges Dichtelement 198 aufgesetzt, über das sich das Oberteil 192 abdichtend legt. Ferner ist zur besseren Verteilung des zuströmenden Kraftstoffs im Anschlußstopfen 193 eine Ringnut 199 vorgesehen, in welche die Radialbohrung 97 mündet, während im Mittelrohr 77 mehrere Durchgangsöffnungen 104 liegen.

Selbstverständlich sind an den gezeigten Ausführungsformen Änderungen möglich, ohne vom Gedanken der Erfindung abzuweichen. So kann die Schutzhülle nahe einer Abbindestelle eine insbesondere gewellte oder gefaltete Übergangszone zwischen unterschiedlich großen Querschnittszonen aufweisen, um starke Unterschiede im Durchmesser leichter überwinden zu können.

## Patentansprüche

1. Flüssigkeitsfilter, insbesondere zur Reinigung von Kraftstoffen auf Fahrzeugen, mit einem Gehäuse, an dem wenigstens zwei Anschlüsse für Zulauf und Ablauf angeordnet sind und das in einem Innenraum einen Filtereinsatz aufnimmt, der zwischen Zulauf und Ablauf geschaltet ist, dadurch gekennzeichnet, daß der Filtereinsatz (18; 51; 76; 131; 153; 181) im Innenraum (17; 75) des Gehäuses (13; 71) von einer Schutzhülle (34; 115; 133; 151; 171; 191) umgeben ist, die einen zum Innenraum (17; 75) hin abgedichteten Auffangraum (38; 121) einschließt, der die bei Crash-Bedingungen aus dem Filtereinsatz (18; 51; 76; 131; 153; 181) austretende Flüssigkeit auffangen kann.

2. Flüssigkeitsfilter nach Anspruch 1, dadurch gekennzeichnet, daß die Schutzhülle (34, 115) einteilig ausgebildet ist, den Filtereinsatz (18, 51, 76) schlauchartig umgibt und an zwei zueinander entgegengesetzt liegenden Stellen (35, 36; 116, 118) des Filtereinsatzes (18, 51, 76) dicht und fest mit ihm verbunden ist.

3. Flüssigkeitsfilter nach Anspruch 1, dadurch gekennzeichnet, daß die Schutzhülle (133; 151, 171; 191) wenigstens zweiteilig ausgebildet ist und ein Oberteil ( 134, 154; 173, 192) sowie ein Unterteil (135; 155; 176; 185; 194) aufweist.

4. Flüssigkeitsfilter nach Anspruch 3, dadurch gekennzeichnet, daß das Oberteil (134; 192) und das Unterteil (135; 194) an ihren jeweils äußeren Rändern (138, 139; 195, 196) miteinander dicht und fest verbunden sind.

5. Flüssigkeitsfilter nach Anspruch 3, dadurch gekennzeichnet, daß das Oberteil (154, 173) und das Unterteil (155; 176; 185) mit ihren äußeren Rändern an einer Außenwand (152; 172) des Filtereinsatzes (153; 181) dicht befestigt sind und die Außenwand (152; 172) als ein Teil der Schutzhülle (151; 171) ausgebildet ist.

6. Flüssigkeitsfilter nach einem oder mehreren der Ansprüche 1 - 5, dadurch gekennzeichnet, daß die Schutzhülle (34; 115; 133; 151; 171; 191) aus einem reißfesten, folienartigen und relativ flexiblem Material, insbesondere Kunststoff oder Gummi, besteht.

7. Flüssigkeitsfilter nach einem oder mehreren der Ansprüche 1 - 6, dadurch gekennzeichnet, daß in dem von der Schutzhülle (34; 115; 133; 151; 171; 191) umgebenen Auffangraum (38; 121) den Durchflußquerschnitt sicherstellende Stützmittel (39; 59; 113; 136; 154) auf der Schmutz(23; 99) und/oder der Reinseite (24; 93) angeordnet sind.

8. Flüssigkeitsfilter nach einem der Ansprüche 1 - 7, dadurch gekennzeichnet, daß der Filtereinsatz als Wickelelement (18; 76; 131; 153; 181) ausgebildet ist.

9. Flüssigkeitsfilter nach einem der Ansprüche 1 - 4, 6 und 7, dadurch gekennzeichnet, daß der Filtereinsatz als Sternelement (51) ausgebildet ist.

10. Flüssigkeitsfilter nach einem der Ansprüche 1 - 9, dadurch gekennzeichnet, daß das Gehäuse (13; 71) aus einem becherförmigen Gehäuseteil (14; 72) und einem damit lösbar verbundenen Deckel (15, 73) besteht.

11. Flüssigkeitsfilter nach einem der Ansprüche 1 - 8 und 10, dadurch gekennzeichnet, daß es als Leitungsfilter mit an entgegengesetzten Seiten des Gehäuses (13) liegenden Rohrstutzen (32, 33) für Zulauf (11) und Ablauf (12) ausgebildet ist und beide Rohrstutzen (32, 33) in ein Mittelrohr (19) eines Wickelelements (18) ragen wobei beide Enden des Mittelrohrs (19) jeweils über eine elastische Profilringdichtung (28, 29) am Gehäuse (13) abgedichtet sind, deren in das Mittelrohr (19) ragende hülsenförmige Stulpen (30) die Rohrstutzen (32, 33) dichtend haltern, während im Bereich der Profilringdichtungen (28, 29) die Enden (35, 36) der schlauchförmigen Schutzhülle (34) außerhalb des Mittelrohrs (19) dicht befestigt sind.

12. Flüssigkeitsfilter nach Anspruch 11, dadurch gekennzeichnet daß die schlauchförmige Schutzhülle (34) mit ihren Enden (35, 36) auf den äußeren Stulpen (31) der Profilringdichtungen (28, 29) dicht befestigt ist, insbesondere mit Halteringen (37).

13. Flüssigkeitsfilter nach Anspruch 11 oder 12, dadurch gekennzeichnet, daß im Auffangraum (38) der Schutzhülle (34) auf der Schmutzseite (23) des Wickelelements (18) eine als Stützmittel dienende Stützscheibe (39) angeordnet ist, die insbesondere am Mittelrohr (19) befestigt ist.

14. Flüssigkeitsfilter nach einem der Ansprüche 1 - 4, 6, 7, 9, 10, dadurch gekennzeichnet, daß es als Leitungsfilter mit an entgegengesetzten Seiten des Gehäuses (13) liegenden Rohrstutzen (32, 33) für Zulauf (11) und Ablauf (12) ausgebildet ist und beide Rohrstutzen (32 33) im Innenraum (17) des Gehäuses (13) jeweils in einen stirnseitigen Dichtstopfen (55, 56) eines Sterneinsatzes (51) ragen, dessen stirnseitige Abdeckkappen (53, 54) in den Dichtstopfen (55, 56) dicht befestigt sind, daß im zulaufseitigen Dichtstopfen (55) der Zulauf (11, 32) sich in Radialkanäle (58) verzweigt, während der ablaufseitige Rohrstutzen (33) den zugeordneten Dichtstopfen (56) durchdringt, daß die Enden (35, 36) der schlauchförmigen Schutzhülle (34) an beiden Dichtstopfen (55, 56) abgebunden sind und daß mindestens im Bereich der zulaufseitigen Abdeckkappe (53) Stützmittel (59) angeordnet sind, welche die Radialkanäle (58) mit der schmutzseitigen Umfangsfläche des Sterneinsatzes (51) verbindende Ringräume (62) bilden.

15. Flüssigkeitsfilter nach Anspruch 14, dadurch gekennzeichnet, daß die Stützmittel als am Außendurchmesser der Abdeckkappe (53) schräg nach außen ragende Haltearme (59) ausgebildet sind, die insbesondere in die Abdeckkappe (53) integriert sind und Durchtrittsöffnungen (61) bilden.

16. Flüssigkeitsfilter nach einem oder mehreren der Ansprüche 1 - 8 und 10, dadurch gekennzeichnet, daß im Gehäuse-Deckel (73) ein Anschlußstopfen (78) dicht eingesetzt ist, der aus elastischem Material, insbesondere Gummi oder Kunststoff mit begrenzter Elastizität besteht und an den außerhalb des Deckels (73) die Rohrstutzen (101, 92) für Zulauf (102) und Ablauf (94) angeschlossen sind, während innerhalb des Deckels (73) der Wickeleinsatz (76) mit seinem Mittelrohr (77) und die Schutzhülle (115) mit ihrem einen Ende (116) dicht angeschlossen sind und daß im Anschlußstopfen (78) vom Zulauf (102) ein winkelförmiger Zulaufkanal (103) in dessen Mantelfläche (100) verläuft und über Durchgangsöffnungen (104) im Mittelrohr (77) mit der Schmutzseite (99) zwischen Schutzhülle (115) und Wickelelement (76) Verbindung hat, während ein Ablaufkanal (95) im Anschlußstopfen (78) den Ablauf (94) mit der im Mittelrohr (77) liegenden Reinseite (93) des Wickelelements (76) verbindet und daß das Wickelelement (76) ein den Wickel (105) aufnehmendes, im wesentlichen becherförmiges Bodenteil (107) aufweist, das einen der Reinseite (93) zugeordneten Ringraum (108) begrenzt, daß auf der dem Bodenteil (107) gegenüberliegenden Stirnseite des Wickels (105) ein der Schmutzseite (99) zugeordneter Stutzring (113) angeordnet ist und daß die einteilige Schutzhülle (115) Bodenteil (107), Wickel (105) und Stutzring (113) umschließt und in den beiden Endbereichen des Mittelrohrs (77) dicht befestigt ist.

17. Flüssigkeitsfilter nach Anspruch 16, dadurch gekennzeichnet, daß die Schutzhülle (115) mit ihrem einen Ende (116) an einem den Stützring (113) überragenden Endabschnitt des Mittelrohrs (72) dicht befestigt, insbesondere verklebt ist und mit ihrem anderen Ende (118) im Bereich einer Verschlußschraube (112) axial zwischen dem Boden des Gehäuseteils (72) und einem Mittelrohr-Ende (109) dicht und fest eingespannt ist.

18. Flüssigkeitsfilter nach einem oder mehreren der Ansprüche 1 - 8 und 10, dadurch gekennzeichnet, daß im Gehäuse-Deckel (73) ein Anschlußstopfen (78) dicht eingesetzt ist, der aus elastischem Material, insbesondere Gummi oder Kunststoff mit begrenzter Elastizität besteht und an den außerhalb des Deckels (73) die Rohrstutzen (101, 92) für Zulauf (102) und Ablauf (94) angeschlossen sind, während innerhalb des Deckels (73) der Wickeleinsatz (76) mit seinem Mittelrohr (77) und die Schutzhülle (133) mit ihrem einen Ende (116) dicht angeschlossen sind und daß im Anschlußstopfen (78) vom Zulauf (102) ein winkelförmiger Zulaufkanal (103) in dessen Mantelfläche (100) verläuft und über Durchgangsöffnungen (104) im Mittelrohr (77) mit der Schmutzseite (99) zwischen Schutzhülle (133) und Wickelelement (76) Verbindung hat, während ein Ablaufkanal (95) im Anschlußstopfen (78) den Ablauf (94) mit der im Mittelrohr (77) liegenden Reinseite (93) des Wickelelements (76) verbindet und daß das Wickelelement (131) ein den Wickel (105) in axialer Länge beidseitig überragendes Außenrohr (132) aufweist, das seinerseits beidseitig in axialer Richtung vom Mittelrohr (77) überragt wird, daß die zweiteilige Schutzhülle (133) ein Oberteil (134) und ein Unterteil (135) aufweist, die an der Außenwand des Außenrohres (132) mit ihren zugeordneten Rändern (138, 139) miteinander dicht und fest verbunden sind, während die anderen, auf dem kleineren Durchmesser liegenden Enden (116, 137) von Oberteil (134) und Unterteil (135) jeweils am Mittelrohr (77) dicht befestigt, insbesondere verklebt, sind (Figur 5).

19. Flüssigkeitsfilter nach Anspruch 18, dadurch gekennzeichnet, daß die den Wickel (105) axial beidseitig überragenden Enden (136) des Außenrohrs (77) die Stützmittel zur Bildung eines auf der Schmutzseite (99) gelegenen Ringraums und eines auf der Reinseite (93) gelegenen Ringraumes (108), insbesondere zur Wasserspeicherung, bilden.

20. Flüssigkeitsfilter nach einem oder mehreren der Ansprüche 1 - 8 und 10, dadurch gekennzeichnet, daß im Gehäuse-Deckel (73) ein Anschlußstopfen (156) dicht eingesetzt ist, der aus elastischem Material, insbesondere Gummi oder Kunststoff mit begrenzter Elastizität besteht und an den außerhalb des Deckels (73) die Rohrstutzen (101, 92) für Zulauf (102) und Ablauf (94) angeschlossen sind, während innerhalb des Deckels (73) der Wickeleinsatz (76) mit seinem Mittelrohr (77) und die Schutzhülle (151) mit ihrem einen Ende (116) dicht angeschlossen sind und daß im Anschlußstopfen (156) vom Zulauf (102) ein winkelförmiger Zulaufkanal (103) in dessen Mantelfläche (100) verläuft und über Durchgangsöffnungen (104) im Mittelrohr (77) mit der Schmutzseite (99) zwischen Schutzhülle (151) und Wickelelement (76) Verbindung hat, während ein Anlaufkanal (95) im Anschlußstopfen (156) den Anlauf (94) mit der im Mittelrohr (77) liegenden Reinseite (93) des Wickelelements (76) verbindet und daß die Schutzhülle (151) mehrteilig ausgebildet ist und ein Oberteil (154) und ein Unterteil (155) aufweist, die jeweils als schalenförmige Formteile mit einer zentralen Ausnehmung ausgebildet sind, wobei die Formteile (154, 155) mit ihren Ausnehmungen am Anschlußstopfen (156) bzw. im Bereich des Verschlußstopfens (163) dicht eingespannt sind, während sie mit ihrem äußeren Rand jeweils mit dem Außenrohr (152) des Wickelelements (153) dicht und fest verbunden, insbesondere verklebt oder verschweißt, sind und daß das Außenrohr (152) zwischen den im Anstand voneinander liegenden Anbindestellen (159, 161) ebenfalls als Teil der Schutzhülle (151) ausgebildet ist (Figur 6).

21. Flüssigkeitsfilter nach Anspruch 20, dadurch gekennzeichnet, daß das Außenrohr (152) aus Pappe besteht, das durch Imprägnierung, Beschichtung oder ähnliche Behandlung dicht ausgebildet ist.

22. Flüssigkeitsfilter nach einem oder mehreren der Ansprüche 1 - 8 und 10, dadurch gekennzeichnet, daß im Gehäuse-Deckel (73) ein Anschlußstopfen (174, 193) dicht eingesetzt ist, der aus elastischem Material, insbesondere Gummi oder Kunststoff mit begrenzter Elastizität besteht und an den außerhalb des Deckels (73) die Rohrstutzen (101, 92) für Zulauf (102) und Anlauf (94) angeschlossen sind, während innerhalb des Deckels (73) der Wickeleinsatz (76) mit seinem Mittelrohr (77) und die Schutzhülle (171, 191) mit ihrem einen Ende (116) dicht angeschlossen sind und daß im Anschlußstopfen (174, 193) vom Zulauf (102) ein winkelförmiger Zulaufkanal (103) in dessen Mantelfläche (100) verläuft und über Durchgangsöffnungen (104) im Mittelrohr (77) mit der Schmutzseite (99) zwischen Schutzhülle (115) und Wickelelement (76) Verbindung hat, während ein Anlaufkanal (95) im Anschlußstopfen (174, 193) den Anlauf (94) mit der im Mittelrohr (77) liegenden Reinseite (93) des Wickelelements (76) verbindet, daß die Schutzhülle (171; 191) mehrteilig ist und ein kappenförmiges Oberteil (173; 192) aufweist, das einstückig mit dem Anschlußstopfen (174; 193) ausgebildet ist und daß die Schutzhülle (171) ein kappenförmiges Unterteil (176; 185) aufweist, das einstückig mit einem der Verschlußschraube (112) zugeordneten Verschlußstopfen (177; 187) mit Gewinde ausgebildet ist.

23. Flüssigkeitsfilter nach Anspruch 22, dadurch gekennzeichnet, daß das Oberteil (173) und das Unterteil (176; 185) jeweils mit ihrem äußeren Rand an dem Außenrohr (172) des Wickelelements (153) im axialen Anstand voneinander dicht befestigt sind und das Außenrohr (172) einen Teil der Schutzhülle (171) bildet.

24. Flüssigkeitsfilter nach Anspruch 22 oder 23, dadurch gekennzeichnet, daß das Mittelrohr (77) sich zwischen Anschlußstopfen (174) und Verschlußstopfen (177) erstreckt.

25. Flüssigkeitsfilter nach einem der Ansprüche 22 - 24, dadurch gekennzeichnet, daß das Gehäuseteil (72) eine Schulter (183) aufweist, auf der sich der Wickeleinsatz (181) abstutzt und daß das Unterteil (185) der Schutzhülle (171) mit seinem äußeren Rand oberhalb der Schulter (183) am Außenrohr (172) des Wickeleinsatzes (181) befestigt ist (Figur 8).

26. Flüssigkeitsfilter nach Anspruch 22, dadurch gekennzeichnet, daß die Schutzhülle (191) zweiteilig ausgebildet ist und die äußeren Ränder (195, 196) des kappenartigen Oberteils (192) und des Unterteils (194) miteinander durch einen Klemmverschluß (197) dicht und fest verbunden sind.

27. Flüssigkeitsfilter nach Anspruch 26, dadurch gekennzeichnet, daß das Wickelelement (200) an seinem Außenrohr (172) an einem den Wickel (105) überragenden Ende ein Dichtringelement (198) aufweist, an dem das Oberteil (192) anliegt und dabei die Schmutzseite (99) begrenzt.

28. Flüssigkeitsfilter nach einem oder mehreren der Ansprüche 1 - 27, dadurch gekennzeichnet, daß die Schutzhülle bzw. ein Teil der Schutzhülle als Schrumpfschlauch ausgebildet ist.

29. Flüssigkeitsfilter nach einem der Ansprüche 1 - 21, dadurch gekennzeichnet, daß die Schutzhülle bzw. ein Teil der Schutzhülle sackartig mit einseitig im Durchmesser kleinerem Schlauchfortsatz für eine Anbindestelle ausgebildet ist.

## Claims

1. Liquid filter, particularly for the purification of fuels on vehicles, with a housing on which at least two connections for inflow and outflow are arranged and which receives in an inner space a filter insert inserted between the inflow and outflow, characterized in that the filter insert (18; 51; 76; 131; 153; 181) is surrounded in the inner space (17; 75) of the housing (13; 71) by a protective sheath (34; 115; 133; 151; 171; 191) enclosing a collecting space (38; 121) which is sealed off relative to the inner space (17; 75) and which can collect the liquid emerging from the filter insert (18; 51; 76; 131; 153; 181) under crash conditions.

2. Liquid filter according to Claim 1, characterized in that the protective sheath (34, 115) is designed as one part, surrounds the filter insert (18, 51, 76) in the manner of a hose and is sealingly and fixedly connected to it at two mutually opposite points (35, 36; 116, 118) of the filter insert (18, 51, 76).

3. Liquid filter according to Claim 1, characterized in that the protective sheath (133; 151, 171; 191) is designed as at least two parts and has an upper part (134, 154; 173, 192) and a lower part (135; 155; 176; 185; 194).

4. Liquid filter according to Claim 3, characterized in that the upper part (134; 192) and the lower part (135; 194) are sealingly and fixedly connected to one another at their respective outer edges (138, 139; 195, 196).

5. Liquid filter according to Claim 3, characterized in that the upper part (154, 173) and the lower part (155; 176; 185) are sealingly fastened at their outer edges to an outer wall (152; 172) of the filter insert (153; 181), and the outer wall (152; 172) is designed as part of the protective sheath (151; 171).

6. Liquid filter according to one or more of Claims 1 to 5, characterized in that the protective sheath (34; 115; 133; 151; 171; 191) consists of a tear-resistant, film-like and relatively flexible material, particularly plastic or rubber.

7. Liquid filter according to one or more of Claims 1 to 6, characterized in that supporting means (39; 59; 113; 136; 154) ensuring the throughflow cross-section are arranged on the dirty side (23; 99) and/or the clean side (24; 93) in the collecting space (38; 121) surrounded by the protective sheath (34; 115; 133; 151; 171; 191).

8. Liquid filter according to one of Claims 1 to 7, characterized in that the filter insert is designed as a wound element (18; 76; 131; 153; 181).

9. Liquid filter according to one of Claims 1 to 4, 6 and 7, characterized in that the filter insert is designed as a star element (51).

10. Liquid filter according to one of Claims 1 to 9, characterized in that the housing (13; 71) consists of a bowl-shaped housing part (14; 72) and of a lid (15, 73) releasably connected thereto.

11. Liquid filter according to one of Claims 1 to 8 and 10, characterized in that it is designed as a conduit filter with tubular connection pieces (32, 33) located on opposite sides of the housing (13) for inflow (11) and outflow (12) and the two tubular connection pieces (32, 33) project into a middle tube (19) of a wound element (18), the two ends of the middle tube (19) being sealed off on the housing (13) in each case via an elastic profiled annular gasket (28, 29), of which sleeve-shaped gauntlets (30) projecting into the middle tube (19) retain the tubular connection pieces (32, 33) sealingly, whilst the ends (35, 36) of the hose-like protective sheath (34) are sealingly fastened outside the middle tube (19) in the region of the profiled annular gaskets (28, 29).

12. Liquid filter according to Claim 11, characterized in that the hose-like protective sheath (34) is sealingly fastened at its ends (35, 36) to the outer gauntlet (31) of the profiled annular gaskets (28, 29), particularly by means of retaining rings (37).

13. Liquid filter according to Claim 11 or 12, characterized in that a supporting disk (39), which serves as a supporting means and which is fastened particularly to the middle tube (19), is arranged in the collecting space (38) of the protective sheath (34) on the dirty side (23) of the wound element (18).

14. Liquid filter according to one of Claims 1 to 4, 6, 7, 9 and 10, characterized in that it is designed as a conduit filter with tubular connection pieces (32, 33) located on opposite sides of the housing (13) for inflow (11) and outflow (12) and the two tubular connection pieces (32, 33) project, in the inner space (17) of the housing (13), in each case into an end sealing plug (55, 56) of a star insert (51), the end cover caps (53, 54) of which are sealingly fastened in the sealing plugs (55, 56), in that the inflow (11, 32) branches into radial ducts (58) in the inflow-side sealing plug (55), whilst the outflow-side tubular connection piece (33) passes through the associated sealing plug (56), in that the ends (35, 36) of the hose-like protective sheath (34) are tied off at the two sealing plugs (55, 56), and in that there are arranged at least in the region of the inflow-side cover cap (53) supporting means (59) which form annular spaces (62) connecting the radial ducts (58) to the dirty-side circumferential surface of the star insert (51).

15. Liquid filter according to Claim 14, characterized in that the supporting means are designed as retaining arms (59) which project obliquely outwards on the outside diameter of the cover cap (53) and which are particularly integrated into the cover cap (53) and form passage orifices (61).

16. Liquid filter according to one or more of Claims 1 to 8 and 10, characterized in that there is sealingly inserted in the housing lid (73) a connecting plug (78) which consists of elastic material, particularly rubber or plastic of limited elasticity, onto which the tubular connection pieces (101, 92) for inflow (102) and outflow (94) are connected outside the lid (73), whilst the wound insert (76) by means of its middle tube (77) and the protective sheath (115) by means of one end (116) are sealingly connected inside the lid (73), and in that, in the connecting plug (78), an angular inflow duct (103) extends in its outer surface (100) from the inflow (102) and is connected via passage orifices (104) in the middle tube (77) to the dirty side (99) between the protective sheath (115) and wound element (76), whilst an outflow duct (95) in the connecting plug (78) connects the outflow (94) to the clean side (93) of the wound element (76), the said clean side (93) being located in the middle tube (77), and in that the wound element (76) has an essentially bowl-shaped bottom part (107) which receives the winding (105) and which limits an annular space (108) assigned to the clean side (93), in that a supporting ring (113) assigned to the dirty side (99) is arranged on that end face of the winding (105) located opposite the bottom part (107), and in that the one-part protective sheath (115) surrounds the bottom part (107), winding (105) and supporting ring (113) and is sealingly fastened in the two end regions of the middle tube (77).

17. Liquid filter according to Claim 16, characterized in that the protective sheath (115) is sealingly fastened, particularly adhesively bonded, at one end (116) to an end portion of the middle tube (72), the said end portion projecting above the supporting ring (113), and at its other end (118) is sealingly and fixedly clamped, in the region of a plug screw (112), axially between the bottom of the housing part (72) and a middle-tube end (109).

18. Liquid filter according to one or more of Claims 1 to 8 and 10, characterized in that there is sealingly inserted in the housing lid (73) a connecting plug (78) which consists of elastic material, particularly rubber or plastic of limited elasticity, and to which the tubular connection pieces (101, 92) for inflow (102) and outflow (94) are connected outside the lid (73), whilst the wound insert (76) by means of its middle tube (77) and the protective sheath (133) by means of one end (116) are sealingly connected inside the lid (73), and in that, in the connecting plug (78), an angular inflow duct (103) extends in its outer surface (100) from the inflow (102) and is connected via passage orifices (104) in the middle tube (77) to the dirty side (99) between the protective sheath (133) and wound element (76), whilst an outflow duct (95) in the connecting plug (78) connects the outflow (94) to the clean side (93) of the wound element (76), the said clean side (93) being located in the middle tube (77), and in that the wound element (131) has an outer tube (132) which projects beyond the winding (105) on both sides over the axial length and beyond which the middle tube (77) in turn projects on both sides in the axial direction, in that the two-part protective sheath (133) has an upper part (134) and a lower part (135) which are sealingly and fixedly connected to one another on the outer wall of the outer tube (132) at their associated edges (138, 139), whilst the other ends (116, 137) of the upper part (134) and lower part (135), the said ends (116, 137) being located on the smaller diameter, are in each case sealingly fastened, particularly adhesively bonded, to the middle tube (77) (Figure 5).

19. Liquid filter according to claim 18, characterized in that the ends (136) of the outer tube (77) which project axially beyond the winding (105) on both sides constitute the supporting means for forming an annular space located on the dirty side (99) and an annular space (108) located on the clean side (93), particularly for water storage.

20. Liquid filter according to one or more of Claims 1 to 8 and 10, characterized in that there is sealingly inserted in the housing lid (73) a connecting plug (156) which consists of elastic material, particularly rubber or plastic of limited elasticity, and to which the tubular connection pieces (101, 92) for inflow (102) and outflow (94) are connected outside the lid (73), whilst the wound insert (76) by means of its middle tube (77) and the protective sheath (151) by means of one end (116) are sealingly connected inside the lid (73), and in that, in the connecting plug (156), an angular inflow duct (103) extends in its outer surface (100) from the inflow (102) and is connected via passage orifices (104) in the middle tube (77) to the dirty side (99) between the protective sheath (151) and wound element (76), whilst an outflow duct (95) in the connecting plug (156) connects the outflow (94) to the clean side (93) of the wound element (76), the said clean side (93) being located in the middle tube (77), and in that the protective sheath (151) is of multi-part design and has an upper part (154) and a lower part (155) which are each designed as a dish-shaped moulding with a central recess, the mouldings (154, 155) being sealingly clamped by means of their recesses to the connecting plug (156) and in the region of the closing plug (163) respectively, whilst they are each sealingly and fixedly connected, particularly adhesively bonded or welded, at their outer edge to the outer tube (152) of the wound element (153), and in that, between the tie-off points (159, 161) located at a distance from one another, the outer tube (152) is likewise designed as part of the protective sheath (151) (Figure 6).

21. Liquid filter according to Claim 20, characterized in that the outer tube (152) consists of paperboard which is made leakproof by impregnation, coating or similar treatment.

22. Liquid filter according to one or more of Claims 1 to 8 and 10, characterized in that there is sealingly inserted in the housing lid (73) a connecting plug (174, 193) which consists of elastic material, particularly rubber or plastic of limited elasticity, and to which the tubular connection pieces (101, 92) for inflow (102) and outflow (94) are connected outside the lid (73), whilst the wound insert (76) by means of its middle tube (77) and the protective sheath (171, 191) by means of one end (116) are sealingly connected inside the lid (73), and in that, in the connecting plug (174, 193), an angular inflow duct (103) extends in its outer surface (100) from the inflow (102) and is connected via passage orifices (104) in the middle tube (77) to the dirty side (99) between the protective sheath (115) and wound element (76), whilst an outflow duct (95) in the connecting plug (174, 193) connects the outflow (94) to the clean side (93) of the wound element (76), the said clean side (93) being located in the middle tube (77), in that the protective sheath (171; 191) is multi-part and has a cap-shaped upper part (173; 192) which is made in one piece with the connecting plug (174; 193), and in that the protective sheath (171) has a cap-shaped lower part (176; 185) which is made in one piece with a closing plug (177; 187) assigned to the plug screw (112) and has a thread.

23. Liquid filter according to Claim 22, characterized in that the upper part (173) and the lower part (176; 185) are each sealingly fastened at their outer edge to the outer tube (172) of the wound element (153) at an axial distance from one another, and the outer tube (172) forms part of the protective sheath (171).

24. Liquid filter according to Claim 22 or 23, characterized in that the middle tube (77) extends between the connecting plug (174) and closing plug (177).

25. Liquid filter according to one of Claims 22 to 24, characterized in that the housing part (72) has a shoulder (183), on which the wound insert (181) is supported, and in that the lower part (185) of the protective sheath (171) is fastened at its outer edge to the outer tube (172) of the wound insert (181) above the shoulder (183) (Figure 8).

26. Liquid filter according to Claim 22, characterized in that the protective sheath (191) is of two-part design and the outer edges (195, 196) of the cap-like upper part (192) and of the lower part (194) are sealingly and fixedly connected to one another by means of a clamp-fastening (197).

27. Liquid filter according to Claim 26, characterized in that the wound element (200) has on its outer tube (172), at one end projecting beyond the winding (105), a sealing-ring element (198), on which the upper part (192) bears and at the same time limits the dirty side (99).

28. Liquid filter according to one or more of Claims 1 to 27, characterized in that the protective sheath or part of the protective sheath is designed as a shrink-fit hose.

29. Liquid filter according to one of Claims 1 to 21, characterized in that the protective sheath or part of the protective sheath is designed in the manner of a bag with, on one side, a hose extension of smaller diameter for a tie-off point.

## Revendications

1. Filtre de liquide, notamment pour l'épuration de carburants sur des véhicules, avec un carter sur lequel sont disposés au moins deux raccordements pour l'entrée et la sortie et qui reçoit, dans un espace interne, une garniture de filtre montée entre l'entrée et la sortie, filtre de liquide caractérisé en ce que la garniture de filtre (18 ; 51 ; 76 ; 131 ; 153 ; 181) est entourée, dans l'espace interne (17, 75) du carter (13 ; 71), par une enveloppe de protection (34 ; 115 ; 133 ; 151 ; 171 ; 191) qui inclut un espace récepteur (38 ; 121) étanché par rapport à l'espace interne (17 ; 75) et qui, en cas de collision, peut recevoir le liquide sortant de la garniture de filtre (18 ; 51 ; 76 ; 131 ; 153 ; 181).

2. Filtre de liquide selon la revendication 1, caractérisé en ce que l'enveloppe de protection (34, 115) est réalisé d'une seule pièce, entoure la garniture de filtre (18, 51, 76) à la façon d'un tuyau souple, et est reliée avec celle-ci solidement et de façon étanche en deux emplacements (35 , 36 ; 116, 118), situés à l'opposé l'un de l'autre, de la garniture de filtre (18, 51, 76).

3. Filtre de liquide selon la revendication 1, caractérisé en ce que l'enveloppe de protection (133 ; 151 ; 171 ; 191) est réalisée au moins en deux parties et comporte une partie supérieure (134, 154 ; 173, 192) ainsi qu'une partie inférieure (135 ; 155 ; 176 ; 185 ; 194).

4. Filtre de liquide selon la revendication 3, caractérisé en ce que la partie supérieure (134 ; 192) et la partie inférieure (135 ; 194) sont reliées ensemble solidement et de façon étanche à leurs bords externes respectifs (138, 139 ; 195, 196).

5. Filtre de liquide selon la revendication 3, caractérisé en ce que la partie supérieure (154, 173) et la partie inférieure (155 ; 176 ; 185) sont fixées de façon étanche, par leurs bords externes, à une paroi externe (152 ; 172) de la garniture de filtre (153 ; 181), et la paroi externe (152 ; 172) est réalisée en tant qu'une partie de l'enveloppe de protection (151 ; 171).

6. Filtre de liquide selon l'une ou plusieurs des revendications 1 à 5, Caractérisé en ce que l'enveloppe de protection (34 ; 115 ; 133 ; 151 ; 171 ; 191) est constituée d'un matériau résistant à la déchirure, du genre film et relativement flexible, notamment en matière plastique ou en caoutchouc.

7. Filtre de liquide selon l'une ou plusieurs des revendications 1 à 6, caractérisé en ce que, dans l'espace récepteur (38 ; 121) entouré par l'enveloppe de protection (34 ; 115 ; 133 ; 151 ; 171 ; 191), les moyens de soutien (39 ; 59 ; 113 ; 136 ; 154) garantissant la section transversale de passage, sont disposés sur le côté souillé (23 ; 99) et/ou le côté propre (24, 93).

8. Filtre de liquide selon l'une des revendications 1 à 7, caractérisé en ce que la garniture de filtre est réalisée sous la forme d'un élément enroulé (18 ; 76 ; 131 ; 153 ; 181).

9. Filtre de liquide selon l'une des revendications 1 à 4, 6 et 7, caractérisé en ce que la garniture de filtre est réalisée sous la forme d'un élément en étoile (51).

10. Filtre de liquide selon l'une des revendications 1 à 9, caractérisé en ce que le carter (13 ; 71) est constitué d'une partie de carter (14 ; 72) en forme de coupe et d'un couvercle (15 ; 73) relié avec elle de façon amovible.

11. Filtre de liquide selon l'une des revendications 1 à 8 et 10, caractérisé en ce qu'il est réalisé sous la forme d'un filtre de canalisation, avec des tubulures (32, 33) se situant du côté opposé du carter (13) pour l'entrée (11) et la sortie (12), et ces deux tubulures (32, 33) font saillie dans un tube médian (19) d'un élément enroulé (18), tandis que les deux extrémités du tube médian (19) sont respectivement étanchées sur le carter (13) par l'intermédiaire d'un joint d'étanchéité annulaire profilé et élastique (28, 29), dont les fourreaux (30) en forme de douilles, faisant saillie dans le tube médian (19), maintiennent de façon étanche les tubulures (32, 33) tandis qu'au voisinage des joints d'étanchéité annulaires profilés (28, 29) les extrémités (35, 36) de l'enveloppe de protection en forme de tube souple (34) sont fixées de façon étanche à l'extérieur du tube médian (19).

12. Filtre de liquide selon la revendication 11, caractérisé en ce que l'enveloppe de protection (34) en forme de tuyau souple est fixée de façon étanche par ses extrémités (35, 36), notamment par des anneaux de maintien (37), sur les fourreaux externes (31) des joints d'étanchéité annulaires profilés (28, 29).

13. Filtre de liquide selon la revendication 11 ou 12, caractérisé en ce que, dans l'espace récepteur (38) de l'enveloppe de protection (34), sur le côté souillé (23) de l'élément enroulé (18), est disposé un disque de soutien (39) servant de moyen de soutien et qui est notamment fixé au tube médian (19).

14. Filtre de liquide selon l'une des revendications 1 à 4, 6, 7, 9, 10, caractérisé en ce qu'il est réalisé en tant que filtre de canalisation avec des tubulures (32, 33), placées sur les côtés opposés du carter (13), pour l'entrée (11) et la sortie (12), et ces deux tubulures (32, 33) font saillie, dans l'espace interne (17) du carter (13), respectivement dans un bouchon d'étanchéité (55, 56) côté frontal d'une garniture en étoile (51), dont les capots de recouvrement (53, 54) côtés frontaux sont fixés de façon étanche dans les bouchons d'étanchéité (55, 56), en ce que, dans le bouchon d'étanchéité (55) côté entrée, l'entrée (11, 32) se ramifie en canaux radiaux (58) tandis que la tubulure (33), côté sortie, traverse le bouchon d'étanchéité correspondant (56), en ce que les extrémités (35, 36) de l'enveloppe de protection en forme de tuyau souple (34) sont fixées sur les deux bouchons d'étanchéité (55, 56) et qu'au moins au voisinage du capot de recouvrement (53) côté entrée, sont disposés des moyens de soutien (59) qui forment des espaces annulaires (62) reliant les canaux radiaux (58) avec la surface périphérique côté souillé de la garniture en étoile (51).

15. Filtre de liquide selon la revendication 14, caractérisé en ce que les moyens de soutien sont réalisés sous la forme de bras de maintien (59) faisant saillie obliquement vers l'extérieur, bras qui sont notamment intégrés dans le capot de recouvrement (53) et forment des ouvertures de passage (61).

16. Filtre de liquide selon l'une ou plusieurs des revendications 1 à 8 et 10, caractérisé en ce que dans le couvercle-carter (73) est mis en place de façon étanche un bouchon de raccordement (78) qui est constitué par un matériau élastique, notamment du caoutchouc ou de la matière plastique ayant une élasticité limitée, et auquel sont raccordées à l'extérieur du couvercle (73) les tubulures (101, 92) pour l'entrée (102) et la sortie (94), tandis qu'à l'intérieur du couvercle (73), la garniture enroulée (76) avec son tube médian (77) et l'enveloppe de protection (115) avec l'une de ses extrémités (116) sont raccordées de façon étanche, en ce que, dans le bouchon de raccordement (78), à partir de l'entrée (102), un canal d'entrée coudé (103) s'étend dans la surface-enveloppe (100) de ce bouchon et est en communication, par des ouvertures de passage (104) formées dans le tube médian (77), avec le côté souillé (99) entre l'enveloppe de protection (115) et l'élément enroulé (76), tandis qu'un canal de sortie (95) formé dans le bouchon de raccordement (78) relie la sortie (94) au côté propre (93), se situant dans le tube médian (77), de l'élément enroulé (76), en ce que l'élément enroulé (76) comporte une partie de fond (107), essentiellement en forme de coupe, recevant l'enroulement (105) et limitant un espace annulaire (108) associé au côté propre (93), en ce que, sur le côté frontal, opposé à la partie de fond (107), de l'enroulement (105), est disposé un anneau de soutien (113) associé au côté souillé (99), et en ce que l'enveloppe de protection (115), d'une seule pièce, entoure la partie de fond (107), l'enroulement (105) et l'anneau de soutien (113), et est fixée de façon étanche sur les deux zones d'extrémité du tube médian (77).

17. Filtre de liquide selon la revendication 16, caractérisé en ce que l'enveloppe de protection (115) est fixée de façon étanche, par l'une de ses extrémités (116), à une partie terminale du tube médian (77) en étant notamment collée, et par son autre extrémité (118), au voisinage d'une vis de fermeture (112), serrée solidement et de façon étanche, axialement entre le fond de la partie de carter (72) et une extrémité (109) du tube médian.

18. Filtre de liquide selon l'une ou plusieurs des revendications 1 à 8 et 10, caractérisé en ce que dans le couvercle-carter (73) est mis en place de façon étanche un bouchon de raccordement (78) qui est constitué d'un matériau élastique, notamment du caoutchouc ou de la matière plastique ayant une élasticité limitée, et sur lequel sont raccordées en dehors du couvercle (73) les tubulures (101, 92) pour l'entrée (102) et la sortie (94), tandis qu'à l'intérieur du couvercle (73), la garniture enroulée (76) avec son tube médian (77) et l'enveloppe de protection (133) avec l'une de ses extrémités (116) sont raccordées de façon étanche, en ce que dans le bouchon de raccordement (78), à partir de l'entrée (102), un canal d'arrivée coudé (103) s'étend dans la surface-enveloppe (100) de ce bouchon et est en communication, par des ouvertures de passage (104) formées dans le tube médian (77), avec le côté souillé (99) entre l'enveloppe de protection (133) et l'élément enroulé (76), tandis qu'un canal de sortie (95) formé dans le bouchon de raccordement (78) relie la sortie (94) au côté propre (93), se situant dans le tube médian (77), de l'élément enroulé (76), en ce que l'élément enroulé (131) comporte un tube externe (132), dépassant des deux côtés en longueur axiale l'enroulement (105) et qui est lui-même dépassé des deux côtés par le tube médian (77), et en ce que l'enveloppe de protection en deux parties (133) comporte une partie supérieure (134) et une partie inférieure (135) qui sont reliées ensemble solidement et de façon étanche par leurs bords (138, 139) associés sur la paroi externe du tube externe (132), tandis que les autres extrémités (116, 137) de la partie supérieure (134) et de la partie inférieure (135) sont respectivement fixées de façon étanche, notamment collées, sur le tube médian (77) (figure 5).

19. Filtre de liquide selon la revendication 18, caractérisé en ce que les extrémités (136) du tube externe (77) dépassant axialement des deux côtés l'enroulement (105), forment les moyens de soutien pour la formation d'un espace annulaire placé sur le côté souillé (99) et d'un espace annulaire (108) placé sur le côté propre (93), notamment pour le stockage de l'eau.

20. Filtre de liquide selon l'une ou plusieurs des revendications 1 à 8 et 10, caractérisé en ce que sur le carter-couvercle (73) est mis en place de façon étanche un bouchon de raccordement (156) qui est constitué par un matériau élastique, notamment du caoutchouc ou une matière plastique ayant une élasticité limitée, et sur lequel sont raccordés, à l'extérieur du couvercle (73), les tubulures (101, 92) pour l'entrée (102) et la sortie (94), tandis qu'à l'intérieur du couvercle (73), la garniture enroulée (76) avec son tube médian (77) et l'enveloppe de protection (151) avec l'une de ses extrémités (116) sont raccordées de façon étanche, en ce que, dans le bouchon de raccordement (156), un canal d'arrivée (103) coudé s'étend, à partir de l'entrée (102), dans la surface enveloppe (100) de ce bouchon et, par l'intermédiaire d'ouvertures de passage (104) formées dans le tube médian (77), est en communication avec le côté souillé (99) entre l'enveloppe de protection (151) et l'élément enroulé (76), tandis qu'un canal de sortie (95) formé dans le bouchon de raccordement (156) relie la sortie (94) au côté propre (93), se situant dans le tube médian (77), de l'élément enroulé (76), en ce que l'enveloppe de protection (151) est réalisée en plusieurs parties et comporte une partie supérieure (154) et une partie inférieure (155) qui sont respectivement réalisées en préformés sous forme de coquille avec un évidement central, tandis que les préformés (154, 155) avec leurs évidements sont serrés de façon étanche sur le bouchon de raccordement (156) ou dans la zone du bouchon de fermeture (163), et qu'avec leur bord externe ils sont respectivement reliés solidement et de façon étanche au tube externe (152) de l'élément enroulé (153), en étant notamment collés ou soudés, et en ce que le tube externe (152), entre les emplacements de fixation (159, 161) se situant à une certaine distance l'un de l'autre, est également réalisé sous la forme d'une partie de l'enveloppe de protection (151) (figure 6).

21. Filtre de liquide selon la revendication 20, caractérisé en ce que le tube externe (152) est en carton rendu étanche par imprégnation, par revêtement ou par un traitement analogue.

22. Filtre de liquide selon l'une ou plusieurs des revendications 1 à 8 et 10, caractérisé en ce que sur le carter-couvercle (73) est mis en place de façon étanche un bouchon de raccordement (174, 193) qui est constitué par un matériau élastique, notamment du caoutchouc ou une matière plastique ayant une élasticité limitée, et sur lequel sont raccordées, à l'extérieur du couvercle (73), les tubulures (101, 92) pour l'entrée (102) et la sortie (94), tandis qu'à l'intérieur du couvercle (73) la garniture enroulée (76) avec son tube médian (77) et l'enveloppe de protection (171, 191) avec l'une des ses extrémités (116), sont raccordées de façon étanche, en ce que dans le bouchon de raccordement (174, 193), à partir de l'entrée (102), un canal d'entrée coudé (103) s'étend dans la surface-enveloppe (100) de ce bouchon et est en communication, par l'intermédiaire d'ouvertures de passage (104) formées dans le tube médian (77), avec le côté souillé (99) entre l'enveloppe de protection (115) et l'élément enroulé (76), tandis qu'un canal de sortie (95) formé dans le bouchon de raccordement (174 ; 193) relie la sortie (94) au côté propre (93), situé dans le tube médian (77), de l'élément enroulé (76), en ce que l'enveloppe de protection (171, 191) est en plusieurs parties et comporte une partie supérieure en forme de capot (173, 192) qui est réalisé d'un seul tenant avec le bouchon de raccordement (174, 193), et en ce que l'enveloppe de protection (171) comporte une partie inférieure en forme de capot (176, 185) qui est réalisée d'un seul tenant avec un bouchon de fermeture (177, 187) à filetage, associé à la vis de fermeture (112).

23. Filtre de liquide selon la revendication 22, caractérisé en ce que la partie supérieure (173) et la partie inférieure (176 ; 185) sont respectivement fixées de façon étanche, à une certaine distance axiale l'une de l'autre et par leur bord externe, sur le tube externe (172) de l'élément enroulé (153), et le tube externe (172) constitue une partie de l'enveloppe de protection (171).

24. Filtre de liquide selon la revendication 22 ou 23, caractérisé en ce que le tube médian (77) s'étend entre un bouchon de raccordement (174) et un bouchon de fermeture (177).

25. Filtre de liquide selon l'une des revendications 22 à 24, caractérisé en ce que la partie de carter (72) comporte un épaulement (183) sur lequel prend appui la garniture enroulée (181), et en ce que la partie inférieure (185) de l'enveloppe de protection (171) est fixée par son bord externe, au-dessus de l'épaulement (183), au tube externe (172) de la garniture enroulée (181) (figure 8).

26. Filtre de liquide selon la revendication 22, caractérisé en ce que l'enveloppe de protection (191) est réalisée en deux parties et les bords externes (195, 196) de la partie supérieure en forme de capot (192) et de la partie inférieure (194), sont reliés ensemble solidement et de façon étanche par une fermeture de serrage (197).

27. Filtre de liquide selon la revendication 26, caractérisé en ce que l'élément enroulé (200) comporte sur son tube externe (172), à une extrémité dépassant de l'enroulement (105), un élément annulaire d'étanchéité (198) sur lequel la partie supérieure (192) s'applique et limite le côté souillé (99).

28. Filtre de liquide selon l'une ou plusieurs des revendications 1 à 27, caractérisé en ce que l'enveloppe de protection ou une partie de l'enveloppe de protection est réalisée sous la forme d'un tube souple rétractable.

29. Filtre de liquide selon l'une des revendications 1 à 21, caractérisé en ce que l'enveloppe de protection ou une partie de l'enveloppe de protection est en forme de sac avec d'un côté un prolongement de tube souple de plus petit diamètre pour un emplacement de fixation.
